# EUROPEAN PATENT SPECIFICATION

(11) **EP 3 700 950 B1**
(45) Date of publication and mention of the grant of the patent: **03.06.2026**
(21) Application number: 18795515.8
(22) Date of filing: 26.10.2018
(51) Int. Cl.: C08F 222/32, C08F 291/02, C09J 4/06, C08K 5/09, C08K 5/315

(54) **CYANOACRYLATE COMPOSITIONS**
CYANACRYLATZUSAMMENSETZUNGEN
COMPOSITIONS DE CYANOACRYLATE

(30) Priority: 27.10.2017 GB 201717711
(43) Date of publication of application: 02.09.2020
(73) Proprietor: Henkel AG & Co. KGaA, 40589 Düsseldorf (DE)
(72) Inventor: COBO, Isidro, Co. Dublin (IE); PHELAN, Marisa, Roscrea Co. Tipperary (IE); SADAUSKAITE, Viktorija, Co. Dublin (IE); WARD, Emer, Co. Dublin (IE); TULLY, Raymond, Co. Meath (IE); BURNS, Barry N., Co. Dublin (IE)
(86) International application number: PCT/EP2018/079495
(87) International publication number: WO 2019/081759

(56) References cited:
- EP-A1- 2 995 663
- WO-A1-2010/029134
- WO-A1-2017/077091
- JP-B2- 2 844 946
- US-A1- 2014 124 137

## Description

### BACKGROUND

### Field

This invention relates to a cyanoacrylate composition, comprising: (a) a β-alkoxyalkyl cyanoacrylate component; (b) a cyanoacrylate component selected from the group consisting of 2-methylbutyl cyanoacrylate, isoamyl cyanoacrylate, 2-ethylhexyl cyanoacrylate, 2-pentyl cyanoacrylate, 3-methylpentyl cyanoacrylate, 2-ethylbutyl cyanoacrylate, 3,7-dimethyloctyl cyanoacrylate, and combinations thereof; (c) a rubber toughening component; (d) a humidity resistance conferring component consisting of an anhydride; and, (e) a thermal resistance conferring component consisting of a benzonitrile, wherein the β-alkoxyalkyl cyanoacrylate component (a) and the cyanoacrylate component (b) are present in the composition in ratio by weight in the range of 50 to 80: 20 to 50.

. Cured products of the inventive cyanoacrylate compositions demonstrate improved toughening, heat and humidity resistance without the odor experienced with conventional cyanoacrylate compositions or the blooming also experienced with conventional cyanoacrylate cured compositions.

### Brief Description of Related Technology

Cyanoacrylate adhesive compositions are well known, and widely used as quick setting, instant adhesives with a wide variety of uses. See H.V. Coover, D.W. Dreifus and J.T. O'Connor, "Cyanoacrylate Adhesives" in Handbook of Adhesives, 27, 463-77, I. Skeist, ed., Van Nostrand Reinhold, New York, 3rd ed. (1990). See also G.H. Millet, "Cyanoacrylate Adhesives" in Structural Adhesives: Chemistry and Technology, S.R. Hartshorn, ed., Plenun Press, New York, p. 249-307 (1986).

U.S. Patent No. 4,440,910 (O'Connor) pioneered rubber toughened cyanoacrylate compositions through the use of certain organic polymers as toughening additives that are elastomeric, i.e., rubbery, in nature. The '910 patent is thus directed to and claims a curable adhesive comprising a substantially solvent-free mixture of: (a) a cyanoacrylate ester, and (b) 0.5% to 20% by weight of an elastomeric polymer. The elastomeric polymer is selected from elastomeric copolymers of a lower alkene monomer and (i) acrylic acid esters, (ii) methacrylic acid esters or (iii) vinyl acetate. More specifically, the '910 patent notes that as toughening additives for cyanoacrylates, acrylic rubbers; polyester urethanes; ethylene-vinyl acetates; fluorinated rubbers; isoprene-acrylonitrile polymers; chlorosulfinated polyethylenes; and homopolymers of polyvinyl acetate were found to be particularly useful.

The elastomeric polymers are described in the '910 patent as either homopolymers of alkyl esters of acrylic acid; copolymers of another polymerizable monomer, such as lower alkenes, with an alkyl or alkoxy ester of acrylic acid; and copolymers of alkyl or alkoxy esters of acrylic acid. Other unsaturated monomers which may be copolymerized with the alkyl and alkoxy esters of acrylic include dienes, reactive halogen-containing unsaturated compounds and other acrylic monomers such as acrylamides.

U.S. Patent No. 5,288,794 (Attarwala) is directed to an improved cyanoacrylate monomer adhesive formulation, where an effective amount, for enhancing the thermal resistance of the polymerized adhesive, of a mono, poly or hetero aromatic compound characterized by at least three substitutions on an aromatic ring thereof, two or more of the substitutions being electron withdrawing groups, is provided. Examples of the aromatic compound are given as 2,4-dinitrofluorobenzene; 2,4-dinitrochlorobenzene; 2,4-difluoronitrobenzene; 3,5-dinitrobenzonitrile; 2-chloro-3,5-dinitrobenzonitrile; 4,4'-difluoro-3,3'-dinitrophenyl sulfone; pentafluoronitrobenzene; pentafluorobenzonitrile; α,α,α-2-tetrafluoro-p-tolunitrile and tetrachloroterphthalonitrile.

Prior to the discovery in the '794 patent, numerous attempts have been made to improve the thermal stability of cyanoacrylate adhesive bonds.

For instance, U.S. Patent No. 3,832,334 is directed to the addition of maleic anhydride, which is reported to produce cyanoacrylate adhesives having increased thermal resistance (when cured) while preserving fast cure speed.

U.S. Patent No. 4,196,271 is directed to tri-, tetra- and higher carboxylic acids or their anhydrides, which are reported to be useful for improving heat resistance of cured cyanoacrylate adhesives.

U.S. Patent No. 4,450,265 is directed to the use of phthalic anhydride to improve heat resistance of cyanoacrylate adhesives. More specifically, the '265 patent is directed to and claims an adhesive composition comprising a polymerizable constituent the major part of which comprises at least one ester of 2-cyanoacrylic acid, characterized in that the composition additionally comprises a proportion of phthalic anhydride effective for favorably influencing the strength and/or durability of adhesive bonds formed from the composition, under exposure to moisture or elevated temperature. The effective amount is reported as 0.1% to 5.0%, such as 0.3% to 0.7%, by weight of the composition. The '265 patent reports the superiority of phthalic anhydride over compositions where no additive was used, and where maleic anhydride was used (though less pronounced in the case of stainless steel lapshears than in those of aluminum).

U.S. Patent No. 4,532,293 is directed to the use of benzephenonetetracarboxylic acid or its anhydride and is said to provide a superior heat resistance for cyanoacrylate adhesives.

U.S. Patent No. 4,490,515 is directed to cyanoacrylate compositions containing certain maleimide or nadimide compounds to improve hot strength properties.

U.S. Patent No. 5,340,873 is directed to a cyanoacrylate adhesive composition having improved toughness and flexibility and consisting essentially of: a) a cyanoacrylate monomer; and b) an effective toughening amount of a saturated, hydroxy terminated polyester polymer derived from a dibasic aliphatic or aromatic carboxylic acid and a glycol and having repeating units of a specific structure where R is the organic residual of the dibasic carboxylic acid and R1 is the organic residue of the glycol, the polyester having a weight average molecular weight of from 30,000 to 60,000 and a Tg of from -40°C to 30°C.

U.S. Patent No. 6,833,196 is directed to a method of enhancing the toughness of a cyanoacrylate composition between steel and EPDM rubber substrates, comprising the steps of: providing a cyanoacrylate component; and providing a toughening agent comprising methyl methacrylic monomer and at least one of butyl acrylic monomer and isobornyl acrylic monomer, whereby the acrylic monomer toughening agent enhances the toughness of the cyanoacrylate composition such that whereupon cure, the cyanoacrylate composition has an average tensile shear strength of over about 4400 psi after 72 hours of room temperature cure and 2 hours post cure at 121°C. WO 2017/077091 A1 further describes toughened cyanoacrylate compositions having improved humidity and thermal resistance.

Conventional commercial ethyl cyanoacrylate compositions have an odor, which some end users find offensive. β-methoxy ethyl cyanoacrylate is known to not have the same odor. And ethyl cyanoacrylate compositions are also known to show blooming when cured. β-methoxy ethyl cyanoacrylate tends not to.

Today there are no toughened, low odor/low bloom cyanoacrylate products commercially available in the market. Commercially available toughened cyanoacrylate products are predominately based on ethyl cyanoacrylate monomer and exhibit (1) an odor that some end users find offensive and/or (2) sometimes blooming when cured. And there are no such products that offer thermal and/or humidity resistance to cured products thereof.

Commercially available cyanoacrylate products are often toughened with an ethylene:methyl methacrylate terpolymer. This polymer contributes little toughness to cyanoacrylate compositions containing β-methoxy ethyl cyanoacrylate, one reason for which may be that the polymer shows sparing solubility in β-methoxy ethyl cyanoacrylate.

Notwithstanding the state of the art and the efforts to date to improve the toughness of β-alkoxyalkyl cyanoacrylate compositions, there remained a long felt, yet unmet, need to provide toughness to cured products of such cyanoacrylate compositions, and while doing so minimize the odor and/or blooming oftentimes associated with cyanoacrylate compositions, and in some instance confer thermal and/or humidity resistance to cured products thereof. Until now.

### SUMMARY

Cyanoacrylate compositions comprising: (a) a β-alkoxyalkyl cyanoacrylate component; (b) a cyanoacrylate component selected from the group consisting of 2-methylbutyl cyanoacrylate, isoamyl cyanoacrylate, 2-ethylhexyl cyanoacrylate, 2-pentyl cyanoacrylate, 3-methylpentyl cyanoacrylate, 2-ethylbutyl cyanoacrylate, 3,7-dimethyloctyl cyanoacrylate, and combinations thereof; (c) a rubber toughening component; (d) a humidity resistance conferring component consisting of an anhydride; and, (e) a thermal resistance conferring component consisting of a benzonitrile, wherein the β-alkoxyalkyl cyanoacrylate component (a) and the cyanoacrylate component (b) are present in the composition in ratio by weight in the range of 50 to 80: 20 to 50 are thus provided.

This invention is also directed to a method of bonding together two substrates, which method includes applying to at least one of the substrates a composition as described above, and thereafter mating together the substrates.

In addition, the present invention is directed to reaction products of the inventive compositions.

Also, the invention is directed to a method of preparing the inventive compositions, and a method of conferring improved toughness, and thermal and humidity resistance to a cured product of a cyanoacrylate composition, without the odor experienced with conventional cyanoacrylate compositions or the blooming also experienced with conventional cyanoacrylate cured compositions.

The invention will be more fully understood by a reading of the section entitled "Detailed Description", which follows.

### BRIEF DESCRIPTION OF THE FIGURES

FIG. 1A depicts a bar chart of the data captured in Table A of the T-Peel strength performance of Sample A on mild steel substrates after curing at room temperature over time, with and without a spacer element which when present forms a 55 µm gap between the substrates.
FIG. 1B depicts a bar chart of the data captured in Table B of the T-Peel strength performance of Samples A-C on mild steel substrates after curing at room temperature for one week, with and without a spacer element which when present forms a 55 µm gap between the substrates.
FIG. 2 depicts a bar chart of side impact strength on mild steel substrates for Samples A-C shown in Table C as compared with LOCTITE Power Easy (referred to in the Tables and FIGs. as "PE") and LOCTITE 454.
FIG. 3 depicts a bar chart of bond strengths on mild steel substrates after room temperature aging for the time periods noted for Samples A-C shown in Table 1 compared with LOCTITE Power Easy and LOCTITE 454.
FIG. 4 depicts a bar chart of bond strengths on aluminum substrates after room temperature aging for the time periods noted for Samples A-C shown in Table 1 compared with LOCTITE Power Easy and LOCTITE 454.
FIG. 5 depicts a bar chart of bond strengths observed on mild steel substrates after aging at a temperature of 100°C for the time periods noted for Samples A-C shown in Table 1 compared with LOCTITE Power Easy and LOCTITE 454.
FIG. 6 depicts a bar chart of bond strengths observed on mild steel substrates after aging at a temperature of 120°C for the time periods noted for Samples A-C shown in Table 1 compared with LOCTITE Power Easy and LOCTITE 454.
FIG. 7 depicts a bar chart of bond strengths on mild steel substrates after moisture durability aging at 40°C/98% RH of Samples A-C shown in Table 1 compared with LOCTITE Power Easy and LOCTITE 454.
FIG. 8 depicts a bar chart of bond strengths observed on mild steel substrates after 6 weeks of aging at room temperature, heat aging at 100°C and 120°C, and 98% relative humidity and 40°C of Samples A-C shown in Table 1 compared with LOCTITE Power Easy and LOCTITE 454.
FIG. 9 depicts a bar chart of bond strengths observed on aluminum substrates after 6 weeks of aging at room temperature, heat aging at 100°C and 120°C, and 98% relative humidity and a temperature of 40°C for Samples A-C shown in Table 1 compared with LOCTITE Power Easy and LOCTITE 454.

### DETAILED DESCRIPTION

As noted above, this invention is directed to a cyanoacrylate composition, comprising: (a) a β-alkoxyalkyl cyanoacrylate component; (b) a cyanoacrylate component selected from the group consisting of 2-methylbutyl cyanoacrylate, isoamyl cyanoacrylate, 2-ethylhexyl cyanoacrylate, 2-pentyl cyanoacrylate, 3-methylpentyl cyanoacrylate, 2-ethylbutyl cyanoacrylate, 3,7-dimethyloctyl cyanoacrylate, and combinations thereof; (c) a rubber toughening component; (d) a humidity resistance conferring component consisting of an anhydride; and, (e) a thermal resistance conferring component consisting of a benzonitrile, wherein the β-alkoxyalkyl cyanoacrylate component (a) and the cyanoacrylate component (b) are present in the composition in ratio by weight in the range of 50 to 80: 20 to 50.

The β-alkoxyalkyl cyanoacrylate component (a) may be chosen from β-methoxymethyl cyanoacrylate, β-methoxyethyl cyanoacrylate, β-ethoxymethyl cyanoacrylate, β-ethoxyethyl cyanoacrylate and combinations thereof. Particularly desirable among those β-alkoxyalkyl cyanoacrylates is β-methoxyethyl cyanoacrylate.

The β-alkoxyalkyl cyanoacrylate component (a) should be included in the compositions in an amount within the range of from 40% to 90% by weight, with the range of 55% to 75% by weight being desirable, such as from 55% to 70% by weight or from 55% to 65% by weight, and 60% by weight of the total composition being particularly desirable.

The cyanoacrylate component (b) may be selected from 2-methylbutyl cyanoacrylate, isoamyl cyanoacrylate, 2-ethylhexyl cyanoacrylate, 2-pentyl cyanoacrylate, 3-methylpentyl cyanoacrylate, 2-ethylbutyl cyanoacrylate, 3,7-dimethyloctyl cyanoacrylate, and combinations thereof. Particularly desirable among those cyanoacrylate components is isoamyl cyanoacrylate.

The cyanoacrylate component (b) should be included in the compositions in an amount within the range of from 10% to 50% by weight, with the range of 20% to 35% by weight being desirable, and 30% by weight of the total composition being particularly desirable.

The rubber toughening component (c) may be selected from (i) reaction products of the combination of ethylene, methyl acrylate and monomers having carboxylic acid cure sites, (ii) dipolymers of ethylene and methyl acrylate, (iii) vinylidene chloride-acrylonitrile copolymers, (iv) vinyl chloride/vinyl acetate copolymer, (v) copolymers of ethylene and vinyl acetate, and combinations thereof.

Desirably, the reaction products (c) (i) of the combination of ethylene, methyl acrylate and monomers having carboxylic acid cure sites, where the reaction products are substantially free of release agents, anti-oxidants, stearic acid and polyethylene glycol ether wax, β-alkoxyalkyl cyanoacrylate are chosen for use. DuPont supplies such a reaction product under the trade name VAMAC VCS 5500.

The rubber toughening component (c) should be included in the compositions in an amount within the range of from 3% to 20% by weight, with the range of 5% to 15% by weight being desirable, and 8% by weight of the total composition being particularly desirable.

A thermal resistance conferring component consisting of a benzonitrile. As a thermal resistance conferring component (d), benzonitriles should be used, such as those chosen from mono-, poly- or hetero-aromatic compounds characterized by at least three substitutions on an aromatic ring thereof, with two or more of the substitutions being electron withdrawing groups. Specific examples of such benzonitriles include 3,5-dinitrobenzonitrile; tetrafluoroisophthalonitrile 2-chloro-3,5-dinitrobenzonitrile; pentafluorobenzonitrile; α,α,α-2-tetrafluoro-p-tolunitrile; and tetrachloroterphthalonitrile.

The thermal resistance conferring component (such as a benzonitrile) should be present in an amount up to 3% by weight, like 0.01% to 3% by weight, such as 0.1% to 1% by weight, with 0.5% by weight being particularly desirable.

A humidity resistance conferring component consisting of an anhydride. As a humidity resistance conferring component (e), hydrogenated anhydrides ordinarily the hydrogenated anhydride should be a hydrogenated phthalic anhydride, such as 3,4,5,6-tetrahydro phthalic anhydride. However, isomeric versions thereof and partially hydrogenated versions of phthalic anhydride may also be used.

The humidity resistance conferring component (such as a hydrogenated phthalic anhydride) should be used in an amount up to 0.1% by weight, such as within the range of 0.01 to 0.09, desirably within the range of 0.03 to 0.05% by weight. At such level, a product label generated under the EINECS regulatory regime in Europe would not need to carry a "skin sensitizer" warning in order to be in compliance with that portion of the regulations.

Desirably, the 3,4,5,6-tetrahydrophthalic anhydride should be used in an amount of up to 1% by weight, such as 0.01% to 1% by weight, and the pentafluorobenzonitrile should be used in an amount of up to 0.5% by weight, such as 0.01% to 0.5% by weight.

A particularly desirable set of constituents to form the inventive compositions may include those listed below, in the broad ranges and the desired ranges. In a parcularly preferred embodiment, the inventive compositions also include citric acid in an amount of 50-100 ppm, desirably in an amount of 100 ppm.

| Constituents | | Broad Range (wt%) | Desirable Range (wt%) |
|---|---|---|---|
| Type | Identity | | |
| Cyanoacrylate | Isoamyl cyanoacrylate | 10-50 | 20-35 |
| | β-Methoxy ethyl cyanoacrylate | 40-90 | 55-75 |
| Rubber toughener | VAMAC VCS 5500 | 3-20 | 5-15 |
| Thickener | Silica | 3-10 | 5-6 |
| Thermal resistance conferring component | Tetrafluoroisophthalonitrile | 0.1-3 | 0.1-1 |
| | 2,3,4,5,6-Pentafluorobenzonitrile | 0.1-3 | 0.1-1 |
| Humidity resistance conferring component | 3,4,5,6-Tetrahydrophthalic anhydride | 0.1-3 | 0.1-1 |

Accelerators may also be included in the inventive cyanoacrylate compositions, such as any one or more selected from calixarenes and oxacalixarenes, silacrowns, crown ethers, cyclodextrins, poly(ethyleneglycol) di(meth)acrylates, ethoxylated hydric compounds and combinations thereof.

Of the calixarenes and oxacalixarenes, many are known, and are reported in the patent literature. See e.g. U.S. Patent Nos. 4,556,700, 4,622,414, 4,636,539, 4,695,615, 4,718,966, and 4,855,461.

For instance, as regards calixarenes, those within the following structure are useful herein: 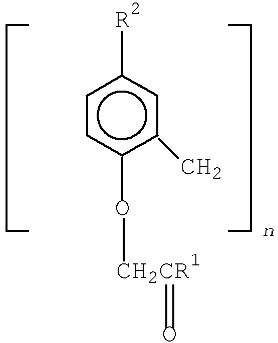 where R¹ is alkyl, alkoxy, substituted alkyl or substituted alkoxy; R² is H or alkyl; and n is 4, 6 or 8.

One particularly desirable calixarene is tetrabutyl tetra[2-ethoxy-2-oxoethoxy]calix-4-arene.

A host of crown ethers are known. For instance, any one or more of 15-crown-5, 18-crown-6, dibenzo-18-crown-6, benzo-15-crown-5-dibenzo-24-crown-8, dibenzo-30-crown-10, tribenzo-18-crown-6, asym-dibenzo-22-crown-6, dibenzo-14-crown-4, dicyclohexyl-18-crown-6, dicyclohexyl-24-crown-8, cyclohexyl-12-crown-4, 1,2-decalyl-15-crown-5, 1,2-naphtho-15-crown-5, 3,4,5-naphtyl-16-crown-5, 1,2-methyl-benzo-18-crown-6, 1,2-methylbenzo-5, 6-methylbenzo-18-crown-6, 1,2-t-butyl-18-crown-6, 1,2-vinylbenzo-15-crown-5, 1,2-vinylbenzo-18-crown-6, 1,2-t-butyl-cyclohexyl-18-crown-6, asym-dibenzo-22-crown-6 and 1,2-benzo-1,4-benzo-5-oxygen-20-crown-7 may be used. See U.S. Patent No. 4,837,260 (Sato. Of the silacrowns, again many are known, and are reported in the literature.

Specific examples of silacrown compounds useful in the inventive compositions include: 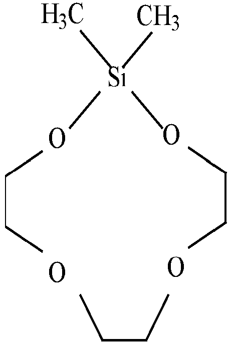 dimethylsila-11-crown-4; 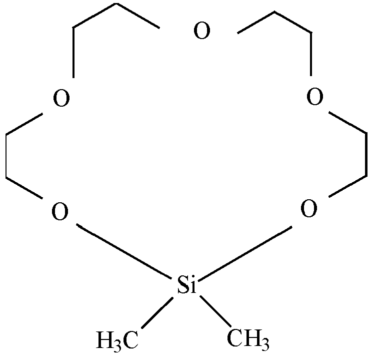 dimethylsila-14-crown-5; 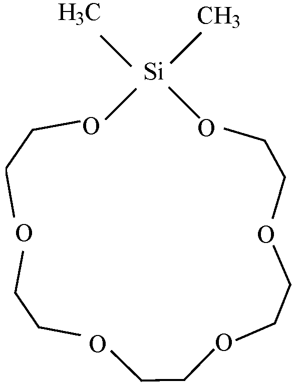 and dimethylsila-17-crown-6.
See e.g. U.S. Patent No. 4,906,317 (Liu.

Many cyclodextrins may be used in connection with the present invention. For instance, those described and claimed in U.S. Patent No. 5,312,864 (Wenz, as hydroxyl group derivatives of an α, β or γ-cyclodextrin which is at least partly soluble in the cyanoacrylate would be appropriate choices for use herein as the first accelerator component.

For instance, poly(ethylene glycol) di(meth)acrylates suitable for use herein include those within the following structure: 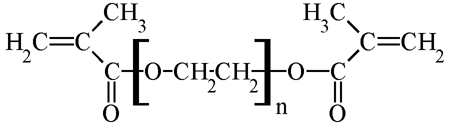 where n is greater than 3, such as within the range of 3 to 12, with n being 9 as particularly desirable. More specific examples include PEG 200 DMA, (where n is 4) PEG 400 DMA (where n is 9), PEG 600 DMA (where n is 14), and PEG 800 DMA (where n is 19), where the number (e.g., 400) represents the average molecular weight of the glycol portion of the molecule, excluding the two methacrylate groups, expressed as grams/mole (i.e., 400 g/mol). A particularly desirable PEG DMA is PEG 400 DMA.

And of the ethoxylated hydric compounds (or ethoxylated fatty alcohols that may be employed), appropriate ones may be chosen from those within the following structure: 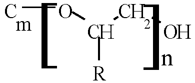 where Cₘ can be a linear or branched alkyl or alkenyl chain, m is an integer between 1 to 30, such as from 5 to 20, n is an integer between 2 to 30, such as from 5 to 15, and R may be H or alkyl, such as C₁₋₆ alkyl.

When used, the accelerator embraced by the above structures should be included in the compositions in an amount within the range of from 0.01% to 10% by weight, with the range of 0.1 to 0.5% by weight being desirable, and 0.4% by weight of the total composition being particularly desirable.

A stabilizer package is also ordinarily found in cyanoacrylate compositions. The stabilizer package may include one or more free radical stabilizers and anionic stabilizers, each of the identity and amount of which are well known to those of ordinary skill in the art. See e.g. U.S. Patent Nos. 5,530,037 and 6,607,632.

Other additives may be included in the inventive cyanoacrylate compositions, such as certain acidic materials (like citric acid), thixotropy or gelling agents, thickeners, dyes, and combinations thereof.

Of the accelerators and these additives, those listed in the table below are desirable examples, particularly in the amounts noted.

| Constituent | Broad Range | Desirable Range |
|---|---|---|
| Crown Ether | 0.1-0.5 % | 0.1-0.2 % |
| Citric Acid | 50-100 ppm | 100 ppm |
| Silica | 0-10 % | 5-6 % |

The cyanoacrylate component (b) may further include cyanoacrylate monomers which may be chosen with a raft of substituents, such as those represented by H₂C=C(CN)-COOR, where R is selected from C₁₋₁₅ alkyl, alkoxyalkyl, cycloalkyl, alkenyl, aralkyl, aryl, allyl and haloalkyl groups. Desirably, these additional cyanoacrylate monomers may be selected from methyl cyanoacrylate, ethyl-2-cyanoacrylate, propyl cyanoacrylates, butyl cyanoacrylates (such as n-butyl-2-cyanoacrylate), octyl cyanoacrylates, allyl cyanoacrylate, and combinations thereof. A particularly desirable one is ethyl-2-cyanoacrylate.

In another aspect of the invention, there is provided a method of bonding together two substrates, which method includes applying to at least one of the substrates a composition as described above, and thereafter mating together the substrates for a time sufficient to permit the adhesive to fixture.

In yet another aspect of the invention, there is provided reaction products of the so-described compositions.

When the composition is disposed between aluminum substrates and forms a cured product and is exposed to a temperature of 100°C for a period of time of about 6 weeks, the cured product demonstrates improved temperature performance over a comparable composition without components (d) and (e).

When the composition is disposed between mild steel substrates and forms a cured product and is exposed to a temperature of 100°C for a period of time of about 6 weeks or relative humidity conditions of 98% and a temperature of 40°C for a period of time of about 6 weeks, the cured product demonstrates improved temperature performance over a comparable composition without components (d) and (e).

When the thermal resistance conferring component is tetrafluoroisophthalonitrile and when the composition is disposed between aluminum or mild steel substrates and forms a cured product and is exposed to a temperature of 120°C for a period of time of about 6 weeks, the cured product demonstrates improved temperature performance over a comparable composition without components (d) and (e).

In still another aspect of the invention, there is provided a method of preparing the so-described compositions. The method includes providing a cyanoacrylate component, and combining therewith with mixing a hydrogenated anhydride and optionally a benzonitrile compound.

The invention will be further illustrated by the examples which follow.

### EXAMPLES

All samples were prepared by mixing together the noted constituents for a sufficient period of time to ensure substantial homogeneity of the constituents. Ordinarily, about 30 minutes should suffice, depending of course on the quantity of the constituents used. Each of the samples also contained citric acid in an amount of 50 ppm, and a stabilizer package.

As controls, LOCTITE Power Easy and LOCTITE 435, were used. LOCTITE Power Easy is a β-methoxy ethyl cyanoacrylate thickened in a gel form with PMMA; LOCTITE 454 is an ethyl cyanoacrylate, rubber toughened with VAMAC VCS 5500, also in gel form. Sample A is a reference sample.

**Table 1**

| **Components** | **Samples/Amt(wt %)** | | |
|---|---|---|---|
| | **A** | **B** | **C** |
| Isoamyl cyanoacrylate | 25.8 | 25.0 | 25.0 |
| β-Methoxyethyl cyanoacrylate | 60.2 | 59.5 | 59.5 |
| VCS 5500 | 8 | 8 | 8 |
| Silica | 6 | 6 | 6 |
| TFIPN* | -- | 0.5 | -- |
| PFBN⁺ | -- | -- | 0.5 |
| THPA^{√} | -- | 1 | 1 |

| | | | |
|---|---|---|---|
| *Tetrafluoroisophthalonitrile ⁺2,3,4,5,6-Pentafluorobenzonitrile ^{√}3,4,5,6-Tetrahydrophthalic anhydride | | | |

Table A below shows the data captured for T-Peel strength performance on mild steel substrates of Sample A after ageing at room temperature, both with and without a 55 µm gap.

**Table A**

| **Time (weeks)@ room temperature** | **Sample A/T-Peel (N/mm)** | | | |
|---|---|---|---|---|
| | **1** | **2** | **4** | **8** |
| 0 gap | 4.1 | 2.8 | 3 | 3.2 |
| 55 µm | 2.5 | 5 | 5.3 | 5. |

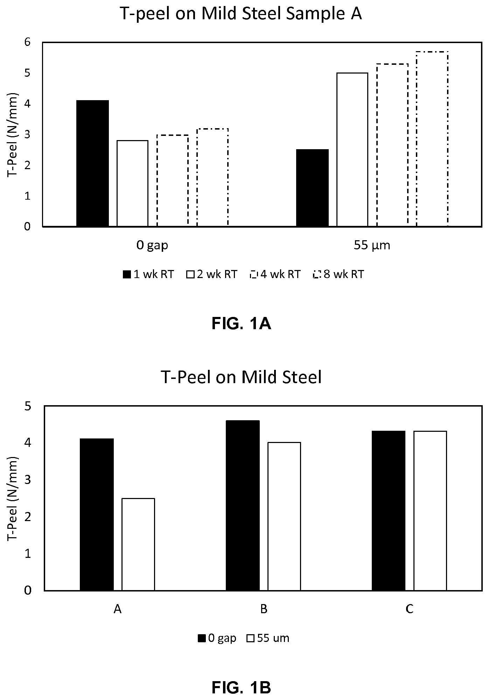

Reference to FIG. 1A shows the T-Peel strength performance from Table A.

FIG. 1A shows that toughness on mild steel substrates is maintained over a period of time of 8 weeks at room temperature. Surprisingly, toughness is enhanced over time in the presence of a 55 µm gap.

Table B below shows the data captured for T-Peel strength performance on mild steel substrates of Samples A-C after ageing at room temperature for 1 week, both with and without a 55 µm gap. The two LOCTITE-branded products, Power Easy and 454, showed no performance under these conditions; consequently, no data is reported.

**Table B**

| | **Sample/T-Peel (N/mm)** | | |
|---|---|---|---|
| | **A** | **B** | **C** |
| 0 gap | 4.1 | 4.6 | 4.3 |
| 55 µm | 2.5 | 4.0 | 4.3 |

Samples B and C illustrate an improvement in toughness as measured by T-Peel strength performance on mild steel substrates.

Table C below shows the data captured for side impact strength performance on mild steel and aluminum substrates, respectively, of Samples A-C and LOCTITE Power Easy and LOCTITE 454 after ageing at room temperature for 1 week.

**Table C**

| **Substrate** | **Sample/Side Impact (J)** | | | | |
|---|---|---|---|---|---|
| | **A** | **B** | **C** | **LOCTITE Power Easy** | **LOCTITE 454** |
| Mild Steel | > 13.56 | > 13.56 | > 13.56 | 5.4 | 4.4 |
| Aluminum | 8.5 | 9.4 | 8.7 | 3.2 | 2.4 |

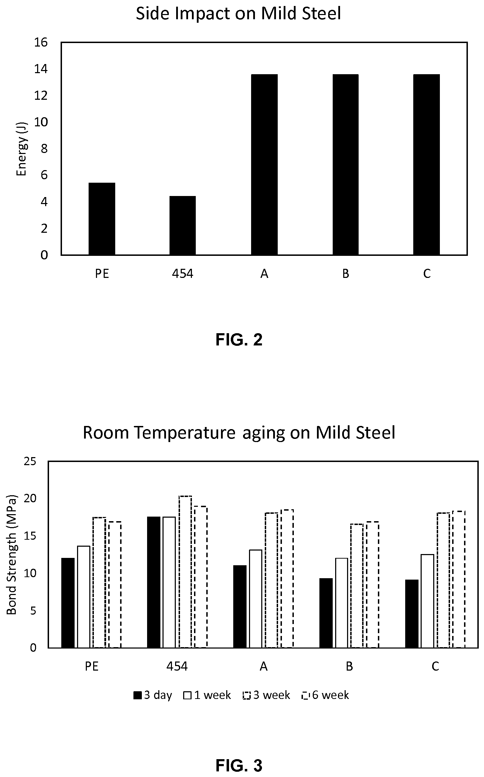

Side impact strength performance on mild steel substrates after room temperature curing for 1 week of each of Samples A-C exceeded 13.56 J, which is the maximum value observable in the test method. These values were at a minimum over two times as high as the LOCTITE-branded controls. Superior performance was also observed for these samples on aluminum substrates after curing at room temperature for 1 week. These values were at a minimum nearly three times as high as the LOCTITE-branded controls. See FIG. 2.

Table D below shows the data captured for tensile strength performance on mild steel and aluminum substrates, respectively, of Samples A-C and LOCTITE Power Easy and LOCTITE 454 after ageing at room temperature for 3 days, 1 week, 3 weeks and 6 weeks.

**Table D**

| **Time (weeks)/ Substrate** | **Sample/Tensile Strength (MPa)** | | | | |
|---|---|---|---|---|---|
| | **A** | **B** | **C** | **LOCTITE Power Easy** | **LOCTITE 454** |
| 3 days/MS | 11.0 | 9.3 | 9.1 | 12.0 | 17.5 |
| 1 week/MS | 13.1 | 12.0 | 12.5 | 13.6 | 17.5 |
| 3 week/MS | 18.1 | 16.6 | 18.1 | 17.5 | 20.3 |
| 6 week/MS | 18.5 | 16.9 | 18.3 | 16.9 | 19.0 |
| 3 days/Al | 10.6 | 10.3 | 12.6 | 9.3 | 10.8 |
| 1 week /Al | 11.5 | 13.0 | 14.0 | 9.8 | 8.1 |
| 3 week /Al | 10.0 | 11.7 | 12.8 | 9.6 | 5.2 |
| 6 week /Al | 13.0 | 14.3 | 13.8 | 8.2 | 3.6 |

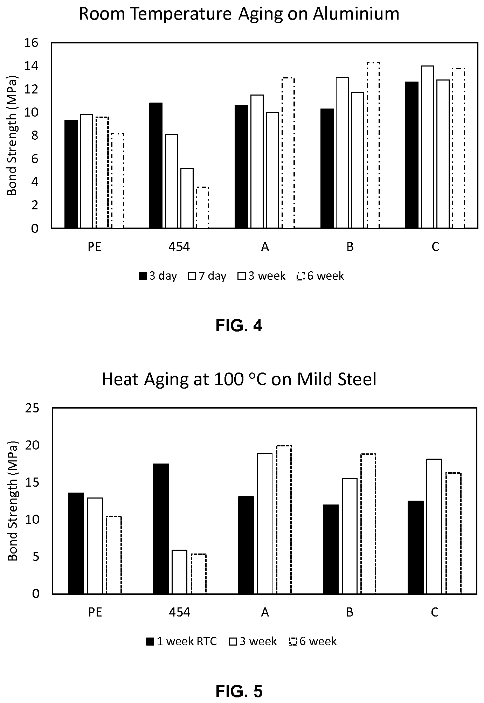

FIGs. 3 and 4 show this data for room temperature aging of Samples A-C and LOCTITE Power Easy and LOCTITE 454 on mild steel substrates and aluminum substrates, respectively. The bond strengths on the mild steel substrates were somewhat lower initially compared to the two LOCTITE-branded products used as controls. However, overtime the bond strengths were observed to increase. And in the case of the aluminum substrates exceptional durability was observed over the aging period.

Table E below shows the data captured for tensile strength performance on mild steel and aluminum substrates, respectively, of Samples A-C and LOCTITE Power Easy and LOCTITE 454 after ageing for 1 week at room temperature followed by aging at a temperature of 100°C for 3 weeks and 6 weeks.

**Table E**

| **Time (weeks)/ Substrate** | **Sample/Tensile Strength (MPa)** | | | | |
|---|---|---|---|---|---|
| | **A** | **B** | **C** | **LOCTITE Power Easy** | **LOCTITE 454** |
| 1 @ RT/MS | 13.1 | 12.0 | 12.5 | 13.6 | 17.5 |
| 3 @100 °C/MS | 18.9 | 15.5 | 18.1 | 12.9 | 5.9 |
| 6 @100 °C/MS | 20.0 | 18.9 | 16.3 | 10.5 | 5.4 |
| 1 @ RT/Al | 11.5 | 13.0 | 14.0 | 9.8 | 8.1 |
| 3 @100 °C /Al | 6.7 | 15.8 | 12.3 | 5.5 | 1.3 |
| 6 @100 °C /Al | 4.4 | 13.6 | 9.1 | 3.8 | 1.5 |

Reference to FIG. 5 shows these data for Samples A-C and LOCTITE Power Easy and LOCTITE 454 on mild steel substrates after ageing for 1 week at room temperature followed by aging at a temperature of 100°C for 3 weeks and 6 weeks. Sample A was observed to show significant improved performance over the LOCTITE-branded products used as controls. The addition of the thermal resistance conferring component was observed to show little impact here. However, as discussed below, at a temperature of 120°C, particularly on the mild steel substrates, considerable improvement in performance is observed compared to the LOCTITE-branded products used as controls and Sample A. Significant durability improvement was observed for Samples B and C on aluminum substrates.

Table F below shows the data captured for tensile strength performance on mild steel and aluminum substrates, respectively, of Samples A-C and LOCTITE Power Easy and LOCTITE 454 after ageing for 1 week at room temperature followed by aging at a temperature of 120°C for 3 weeks and 6 weeks.

**Table F**

| **Time (weeks)/ Substrate** | **Sample/Tensile Strength (MPa)** | | | | |
|---|---|---|---|---|---|
| | **A** | **B** | **C** | **LOCTITE Power Easy** | **LOCTITE 454** |
| 1 @ RT/MS | 13.1 | 12.0 | 12.5 | 13.6 | 17.5 |
| 3 @120 °C/MS | 8.4 | 14.6 | 10.4 | 3.4 | 5.5 |
| 6 @120 °C/MS | 0 | 5.5 | 0 | 0 | 3.8 |
| 1 @ RT/Al | 11.5 | 13.0 | 14.0 | 9.8 | 8.1 |
| 3 @120 °C /Al | 2.2 | 13.2 | 3.7 | 2.8 | 1.3 |
| 6 @120 °C /Al | 0 | 8.6 | 0 | 0 | 1.6 |

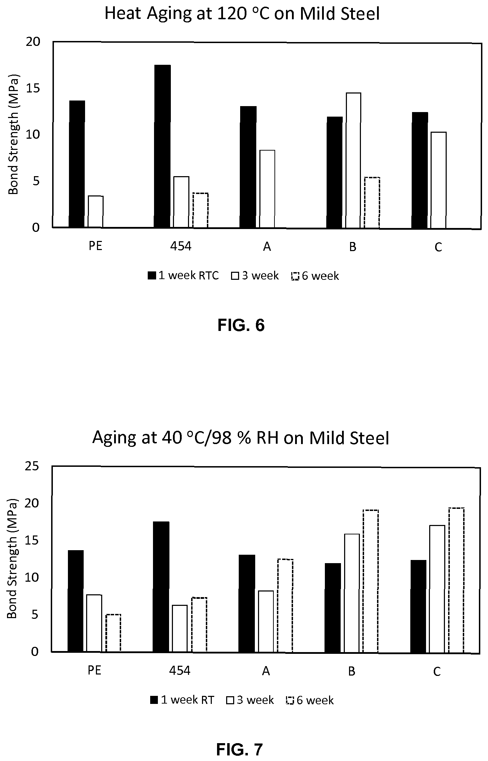

Reference to FIG. 6 shows these data for Samples A-C and LOCTITE Power Easy and LOCTITE 454 on mild steel substrates after ageing for 1 week at room temperature followed by aging at a temperature of 120°C for 3 weeks and 6 weeks. The combination of the TFIPN and THPA in Sample B significantly contributes to the durability at 120°C. Similarly, the same sample used to bond aluminum substrates and aged for 6 weeks has resulted in significant retention of bond strength as reflected in Table F.

Table G below shows data captured for tensile strength performance on mild steel and aluminum substrates, respectively, of Samples A-C and LOCTITE Power Easy and LOCTITE 454 after ageing at 1 week at room temperature followed by aging at 98% relative humidity and a temperature of 40°C for 3 weeks and 6 weeks.

**Table G**

| **Time (weeks)/ Substrate** | **Sample/Tensile Strength (MPa)** | | | | |
|---|---|---|---|---|---|
| | **A** | **B** | **C** | **LOCTITE Power Easy** | **LOCTITE 454** |
| 1@ RT/MS | 13.1 | 12.0 | 12.5 | 13.6 | 17.5 |
| 3 @40°C/98% RH/MS | 8.3 | 16.0 | 17.2 | 7.7 | 6.3 |
| 6 @40°C/98% RH /MS | 12.6 | 19.2 | 19.6 | 5.1 | 7.4 |
| 1@ RT/Al | 11.5 | 13.0 | 14.0 | 9.8 | 8.1 |
| 3 @40°C/98% RH /Al | 3.2 | 3.3 | 2.3 | 1.8 | 0 |
| 6 @40°C/98% RH /Al | 2.4 | 2.5 | 0 | 1.1 | 0 |

Reference to FIG. 7 shows these data for Samples A-C and LOCTITE Power Easy and LOCTITE 454 on mild steel substrates after ageing at 98% relative humidity and a temperature of 40°C for 3 weeks and 6 weeks. Once again, the addition of both the thermal resistance conferring component and the humidity resistance conferring component have significantly enhanced the performance profile, such as is reflected with reference to the data observed with Samples B and C.

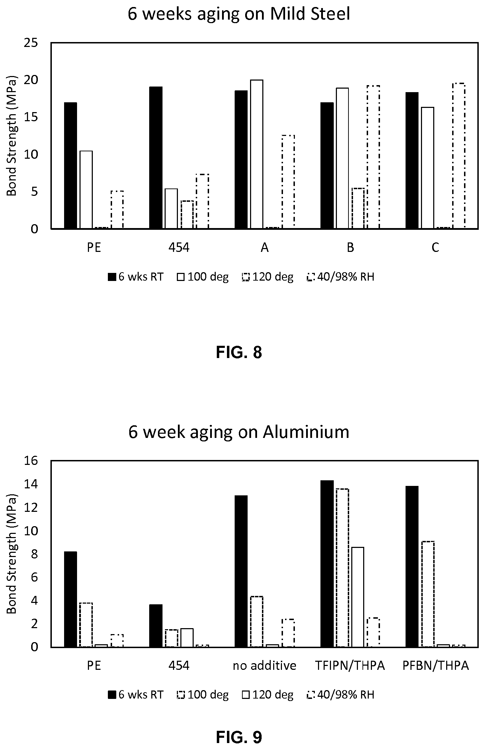

FIGs. 8 and 9 show 6 week data for room temperature, 100°C, 120°C and 98% relative humidity/40°C aging of Samples A-C and LOCTITE Power Easy and LOCTITE 454 on mild steel substrates and aluminum substrates, respectively. These data are captured above in Tables E-G.

At 100°C, the inventive samples outperformed the controls. At 120°C, temperature resistance is demonstrated, particularly over time, with the inventive samples, in particular Sample B on mild steel substrates. Impressive moisture durability is observed with the inventive samples, which significantly outperformed the controls.

## Claims

1. A cyanoacrylate composition, comprising:
(a) a β-alkoxyalkyl cyanoacrylate component;
(b) a cyanoacrylate component selected from the group consisting of 2-methylbutyl cyanoacrylate, isoamyl cyanoacrylate, 2-ethylhexyl cyanoacrylate, 2-pentyl cyanoacrylate, 3-methylpentyl cyanoacrylate, 2-ethylbutyl cyanoacrylate, 3,7-dimethyloctyl cyanoacrylate, and combinations thereof;
(c) a rubber toughening component;
(d) a humidity resistance conferring component consisting of an anhydride; and,
(e) a thermal resistance conferring component consisting of a benzonitrile,
wherein the β-alkoxyalkyl cyanoacrylate component (a) and the cyanoacrylate component (b) are present in the composition in ratio by weight in the range of 50 to 80: 20 to 50.

2. The composition according to Claim 1, wherein the β-alkoxy cyanoacrylate component is selected from β-methoxy ethyl cyanoacrylate, β-ethoxy ethyl cyanoacrylate, and combinations thereof.

3. The composition according to claim 1 or claim 2, wherein the rubber toughening component is selected from the group consisting of: (a) reaction products of the combination of ethylene, methyl acrylate and monomers having carboxylic acid cure sites; (b) dipolymers of ethylene and methyl acrylate; (c) vinylidene chloride-acrylonitrile copolymers; (d) vinyl chloride/vinyl acetate copolymer; (e) copolymers of ethylene and vinyl acetate; and, combinations thereof,
preferably wherein the rubber toughening component is a reaction product of the combination of ethylene, methyl acrylate and monomers having carboxylic acid cure sites, wherein the reaction product is substantially free of release agents, anti-oxidants, stearic acid and polyethylene glycol ether wax.

4. The composition according to any one of claims 1 to 3, wherein the humidity resistance conferring component is an aromatic anhydride, preferably a hydrogenated aromatic anhydride, more preferably a hydrogenated phthalic anhydride, and even more preferably a tetrahydrophthalic anhydride.

5. The composition according to any one of claims 1 to 4, wherein the thermal resistance conferring component is selected from the group consisting of 3,5-dinitrobenzonitrile; 2-chloro-3,5-dinitrobenzonitrile; tetrafluoroisophthalonitrile; pentafluorobenzonitrile; α,α,α-2-tetrafluoro-p-tolunitrile; and, tetrachloroterphthalonitrile.

6. The composition according to Claim 1, further comprising one or more of a thixotrope, a gelling agent, a thickener, an accelerator, and a shock resistance conferring agent,
wherein the thixotrope is preferably a fumed silica,
wherein the accelerator is preferably selected from the group consisting of calixarene, oxacalixarene, silacrown, cyclodextrin, crown ether, poly(ethyleneglycol) di(meth)acrylate, ethoxylated hydric compound, and combinations thereof,
wherein the calixarene is preferably tetrabutyl tetra[2-ethoxy-2-oxoethoxy]calix-4-arene, and
wherein the crown ether is preferably selected from members within the group consisting of 15-crown-5, 18-crown-6, dibenzo-18-crown-6, benzo-15-crown-5-dibenzo-24-crown-8, dibenzo-30-crown-10, tribenzo-18-crown-6, asym-dibenzo-22-crown-6, dibenzo-14-crown-4, dicyclohexyl-18-crown-6, dicyclohexyl-24-crown-8, cyclohexyl-12-crown-4, 1,2-decalyl-15-crown-5, 1,2-naphtho-15-crown-5, 3,4,5-naphtyl-16-crown-5, 1,2-methyl-benzo-18-crown-6, 1,2-methylbenzo-5, 6-methylbenzo-18-crown-6, 1,2-t-butyl-18-crown-6, 1,2-vinylbenzo-15-crown-5, 1,2-vinylbenzo-18-crown-6, 1,2-t-butylcyclohexyl-18-crown-6, asym-dibenzo-22-crown-6, and 1,2-benzo-1,4-benzo-5-oxygen-20-crown-7 and combinations thereof, and,
wherein the poly(ethyleneglycol) di(meth)acrylate is preferably within the following structure: 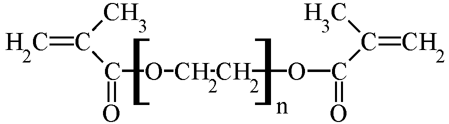 wherein n is greater than 3, and,
wherein the shock resistance conferring agent is preferably citric acid.

7. The composition according to any one of claims 1 to 6, wherein the β-alkoxyalkyl cyanoacrylate component (a) and the cyanoacrylate component (b) are present in the composition in a by weight ratio of 70:30.

8. The composition according to any one of claims 1 to 7, further comprising a stabilizing amount of an acidic stabilizer and a free radical inhibitor.

9. Reaction products of the composition according to any one of claims 1 to 8.

10. A method of bonding together two substrates, comprising the steps of:
applying a cyanoacrylate composition according to any one of Claims 1 to 8, to at least one of the substrates; and,
mating together the substrates for a time sufficient to permit the composition to fixture.

11. A method of preparing a cyanoacrylate composition according to any one of Claims 1 to 8, comprising the steps of:
providing a rubber toughening component dissolved in a cyanoacrylate component selected from the group consisting of 2-methylbutyl cyanoacrylate, isoamyl cyanoacrylate, 2-ethylhexyl cyanoacrylate, 2-pentyl cyanoacrylate, 3-methylpentyl cyanoacrylate, 2-ethylbutyl cyanoacrylate, 3,7-dimethyloctyl cyanoacrylate, and combinations thereof; and,
combining therewith with mixing a β-alkoxyalkyl cyanoacrylate component.

## Patentansprüche

1. Cyanacrylatzusammensetzung, umfassend:
(a) eine β-Alkoxyalkylcyanacrylatkomponente;
(b) eine Cyanacrylatkomponente, ausgewählt aus der Gruppe bestehend aus 2-Methylbutylcyanacrylat, Isoamylcyanacrylat, 2-Ethylhexylcyanacrylat, 2-Pentylcyanacrylat, 3-Methylpentylcyanacrylat, 2-Ethylbutylcyanacrylat, 3,7-Dimethyloctylcyanacrylat und Kombinationen davon;
(c) eine Kautschukverstärkungskomponente;
(d) eine Feuchtigkeitsbeständigkeit verleihende Komponente, bestehend aus einem Anhydrid; und
(e) eine Wärmebeständigkeit verleihende Komponente, bestehend aus einem Benzonitril,
wobei die β-Alkoxyalkylcyanacrylatkomponente (a) und die Cyanacrylatkomponente (b) in der Zusammensetzung in einem Gewichtsverhältnis in einem Bereich von 50 bis 80 : 20 bis 50 vorhanden sind.

2. Zusammensetzung nach Anspruch 1, wobei die β-Alkoxyalkylcyanacrylatkomponente aus β-Methoxyethylcyanacrylat, β-Ethoxyethylcyanacrylat und Kombinationen davon ausgewählt ist.

3. Zusammensetzung nach Anspruch 1 oder 2, wobei die Kautschukverstärkungskomponente aus der Gruppe ausgewählt ist, bestehend aus: (a) Umsetzungsprodukten der Kombination von Ethylen, Methylacrylat und Monomeren, die Carbonsäurehärtungsstellen aufweisen; (b) Dipolymeren von Ethylen und Methylacrylat; (c) Vinylidenchlorid-Acrylnitril-Copolymeren; (d) Vinylchlorid/Vinylacetat-Copolymer; (e) Copolymere von Ethylen und Vinylacetat; und Kombinationen davon,
vorzugsweise wobei die Kautschukverstärkungskomponente ein Umsetzungsprodukt der Kombination von Ethylen, Methylacrylat und Monomeren ist, die Carbonsäurehärtungsstellen aufweisen, wobei das Umsetzungsprodukt im Wesentlichen frei von Trennmitteln, Antioxidantien, Stearinsäure und Polyethylenglykoletherwachs ist.

4. Zusammensetzung nach einem der Ansprüche 1 bis 3, wobei die Feuchtigkeitsbeständigkeit verleihende Komponente ein aromatisches Anhydrid, vorzugsweise ein hydriertes aromatisches Anhydrid, weiter bevorzugt ein hydriertes Phthalsäureanhydrid und noch weiter bevorzugt ein Tetrahydrophthalsäureanhydrid ist.

5. Zusammensetzung nach einem der Ansprüche 1 bis 4, wobei die Wärmebeständigkeit verleihende Komponente aus der Gruppe ausgewählt ist, bestehend aus 3,5-Dinitrobenzonitril; 2-Chlor-3,5-dinitrobenzonitril; Tetrafluorisophthalonitril; Pentafluorbenzonitril; α,α,α-2-Tetrafluor-p-tolunitril; und Tetrachlorterephthalonitril.

6. Zusammensetzung nach Anspruch 1, ferner umfassend eines oder mehrere von einem Thixotropiermittel, einem Geliermittel, einem Verdicker, einem Beschleuniger und einem Stoßfestigkeit verleihenden Mittel,
wobei das Thixotropiermittel vorzugsweise eine pyrogene Kieselsäure ist,
wobei der Beschleuniger vorzugsweise aus der Gruppe ausgewählt ist, bestehend aus Calixaren, Oxacalixaren, Silakrone, Cyclodextrin, Kronenether, Poly(ethylenglykol)di(meth)acrylat, einer ethoxylierten hydrischen Verbindung und Kombinationen davon,
wobei das Calixaren vorzugsweise Tetrabutyltetra[2-ethoxy-2-oxoethoxy]calix-4-aren ist und
wobei der Kronenether vorzugsweise aus Elementen innerhalb der Gruppe ausgewählt ist, bestehend aus 15-Krone-5, 18-Krone-6, Dibenzo-18-krone-6, Benzo-15-krone-5-dibenzo-24-krone-8, Dibenzo-30-krone-10, Tribenzo-18-krone-6, asym-Dibenzo-22-krone-6, Dibenzo-14-krone-4, Dicyclohexyl-18-krone-6, Dicyclohexyl-24-krone-8, Cyclohexyl-12-krone-4, 1,2-Decalyl-15-krone-5, 1,2-Naphtho-15-krone-5, 3,4,5-Naphthyl-16-krone-5, 1,2-Methyl-benzo-18-krone-6, 1,2-Methylbenzo-5, 6-Methylbenzo-18-krone-6, 1,2-t-Butyl-18-krone-6, 1,2-Vinylbenzo-15-krone-5, 1,2-Vinylbenzo-18-krone-6, 1,2-t-Butyl-cyclohexyl-18-krone-6, asym-Dibenzo-22-krone-6 und 1,2-Benzo-1,4-benzo-5-sauerstoff-20-krone-7 und Kombinationen davon und
wobei das Poly(ethylenglykol)di(meth)acrylat vorzugsweise innerhalb der folgenden Struktur vorliegt: 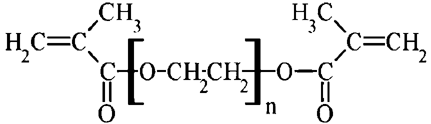
wobei n größer als 3 ist und
wobei das Stoßfestigkeit verleihende Mittel vorzugsweise Citronensäure ist.

7. Zusammensetzung nach einem der Ansprüche 1 bis 6, wobei die β-Alkoxyalkylcyanacrylatkomponente (a) und die Cyanacrylatkomponente (b) in der Zusammensetzung in einem Gewichtsverhältnis von 70 : 30 vorhanden sind.

8. Zusammensetzung nach einem der Ansprüche 1 bis 7, ferner umfassend eine stabilisierende Menge eines sauren Stabilisators und eines Radikalinhibitors.

9. Umsetzungsprodukte der Zusammensetzung nach einem der Ansprüche 1 bis 8.

10. Verfahren zum Verkleben zweier Substrate miteinander, umfassend die Schritte:
Aufbringen einer Cyanacrylatzusammensetzung nach einem der Ansprüche 1 bis 8 auf mindestens eines der Substrate; und
Zusammenfügen der Substrate für eine Zeit, die ausreicht, um die Zusammensetzung fixieren zu lassen.

11. Verfahren zum Herstellen einer Cyanacrylatzusammensetzung nach einem der Ansprüche 1 bis 8, umfassend die Schritte:
Bereitstellen einer in einer Cyanacrylatkomponente gelösten Kautschukverstärkungskomponente, die aus der Gruppe ausgewählt ist, bestehend aus 2-Methylbutylcyanacrylat, Isoamylcyanacrylat, 2-Ethylhexylcyanacrylat, 2-Pentylcyanacrylat, 3-Methylpentylcyanacrylat, 2-Ethylbutylcyanacrylat, 3,7-Dimethyloctylcyanacrylat und Kombinationen davon; und
Kombinieren damit durch Beimischen einer β-Alkoxyalkylcyanacrylatkomponente.

## Revendications

1. Composition de cyanoacrylate, comprenant :
(a) un composant cyanoacrylate de β-alcoxyalkyle ;
(b) un composant cyanoacrylate choisi dans le groupe constitué de cyanoacrylate de 2-méthylbutyle, cyanoacrylate d'isoamyle, cyanoacrylate de 2-éthylhexyle, cyanoacrylate de 2-pentyle, cyanoacrylate de 3-méthylpentyle, cyanoacrylate de 2-éthylbutyle, cyanoacrylate de 3,7-diméthyloctyle, et combinaisons de ceux-ci ;
(c) un composant de renforcement de caoutchouc ;
(d) un composant conférant une résistance à l'humidité, constitué d'un anhydride ; et,
(e) un composant conférant une résistance thermique, constitué d'un benzonitrile,
dans laquelle le composant cyanoacrylate de β-alcoxyalkyle (a) et le composant cyanoacrylate (b) sont présents dans la composition dans un rapport en poids compris dans la plage de 50 à 80: 20 à 50.

2. Composition selon la revendication 1, dans laquelle le composant β-alcoxy cyanoacrylate est choisi parmi cyanoacrylate de β-méthoxyéthyle, cyanoacrylate de β-éthoxyéthyle, et combinaisons de ceux-ci.

3. Composition selon la revendication 1 ou la revendication 2, dans laquelle le composant de renforcement de caoutchouc est choisi dans le groupe constitué de : (a) produits de réaction de la combinaison d'éthylène, d'acrylate de méthyle et de monomères ayant des sites de durcissement d'acide carboxylique ;
(b) dipolymères d'éthylène et d'acrylate de méthyle ; (c) copolymères de chlorure de vinylidène-acrylonitrile ; (d) copolymère de chlorure de vinyle/acétate de vinyle ;
(e) copolymères d'éthylène et d'acétate de vinyle ; et, des combinaisons de ceux-ci,
de préférence dans laquelle le composant de renforcement de caoutchouc est un produit de réaction de la combinaison d'éthylène, d'acrylate de méthyle et de monomères ayant des sites de durcissement d'acide carboxylique, dans laquelle le produit de réaction est sensiblement exempt d'agents de démoulage, d'antioxydants, d'acide stéarique et de cire d'éther de polyéthylène glycol.

4. Composition selon l'une quelconque des revendications 1 à 3, dans laquelle le composant conférant une résistance à l'humidité est un anhydride aromatique, de préférence un anhydride aromatique hydrogéné, plus préférablement un anhydride phtalique hydrogéné, et encore plus préférablement un anhydride tétrahydrophtalique.

5. Composition selon l'une quelconque des revendications 1 à 4, dans laquelle le composant conférant une résistance thermique est choisi dans le groupe constitué de 3,5-dinitrobenzonitrile ; 2-chloro-3,5-dinitrobenzonitrile ; tétrafluoroisophtalonitrile ; pentafluorobenzonitrile ; α,α,α-2-tétrafluoro-p-tolunitrile ; et, tétrachloroterphtalonitrile.

6. Composition selon la revendication 1, comprenant en outre l'un ou plusieurs parmi un thixotrope, un agent gélifiant, un épaississant, un accélérateur, et un agent conférant une résistance aux chocs,
dans laquelle le thixotrope est de préférence une silice pyrogénée,
dans laquelle l'accélérateur est de préférence choisi dans le groupe constitué de calixarène, oxacalixarène, sila-couronne, cyclodextrine, éther couronne, di(méth)acrylate de poly(éthylène glycol), composé hydrique éthoxylé, et combinaisons de ceux-ci,
dans laquelle le calixarène est de préférence le tétrabutyl tétra[2-éthoxy-2-oxoéthoxy]calix-4-arène, et
dans laquelle l'éther couronne est de préférence choisi parmi des éléments dans le groupe constitué de 15-couronne-5, 18-couronne-6, dibenzo-18-couronne-6, benzo-15-couronne-5-dibenzo-24-couronne-8, dibenzo-30-couronne-10, tribenzo-18-couronne-6, asym-dibenzo-22-couronne-6, dibenzo-14-couronne-4, dicyclohexyl-18-couronne-6, dicyclohexyl-24-couronne-8, cyclohexyl-12-couronne-4, 1,2-décalyl-15-couronne-5, 1,2-naphto-15-couronne-5, 3,4,5-naphtyl-16-couronne-5, 1,2-méthyl-benzo-18-couronne-6, 1,2-méthylbenzo-5,6-méthylbenzo-18-couronne-6, 1,2-t-butyl-18-couronne-6, 1,2-vinylbenzo-15-couronne-5, 1,2-vinylbenzo-18-couronne-6, 1,2-t-butyl-cyclohexyl-18-couronne-6, asym-dibenzo-22-couronne-6, et 1,2-benzo-1,4-benzo-5-oxygène-20-couronne-7 et combinaisons de ceux-ci, et,
dans laquelle le di(méth)acrylate de poly(éthylène glycol) est de préférence dans la structure suivante : 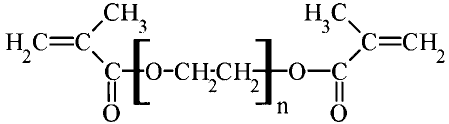
dans laquelle n est supérieur à 3, et,
dans laquelle l'agent conférant une résistance aux chocs est de préférence l'acide citrique.

7. Composition selon l'une quelconque des revendications 1 à 6, dans laquelle le composant cyanoacrylate de β-alcoxyalkyle (a) et le composant cyanoacrylate (b) sont présents dans la composition dans un rapport en poids de 70:30.

8. Composition selon l'une quelconque des revendications 1 à 7, comprenant en outre une quantité stabilisante d'un stabilisateur acide et d'un inhibiteur de radicaux libres.

9. Produits de réaction de la composition selon l'une quelconque des revendications 1 à 8.

10. Procédé de liaison de deux substrats l'un à l'autre, comprenant les étapes consistant à :
appliquer une composition de cyanoacrylate selon l'une quelconque des revendications 1 à 8 sur au moins l'un des substrats ; et,
accoupler les substrats l'un à l'autre pendant une durée suffisante pour permettre à la composition de se fixer.

11. Procédé de préparation d'une composition de cyanoacrylate selon l'une quelconque des revendications 1 à 8, comprenant les étapes consistant à :
fournir un composant de durcissement de caoutchouc dissous dans un composant cyanoacrylate choisi dans le groupe constitué de cyanoacrylate de 2-méthylbutyle, cyanoacrylate d'isoamyle, cyanoacrylate de 2-éthylhexyle, cyanoacrylate de 2-pentyle, cyanoacrylate de 3-méthylpentyle, cyanoacrylate de 2-éthylbutyle, cyanoacrylate de 3,7-diméthyloctyle, et combinaisons de ceux-ci ; et,
combiner celui-ci avec le mélange d'un composant cyanoacrylate de β-alcoxyalkyle.
